# EUROPEAN PATENT SPECIFICATION

(11) **EP 3 115 380 B1**
(45) Date of publication and mention of the grant of the patent: **20.01.2021**
(21) Application number: 14870090.9
(22) Date of filing: 11.12.2014
(51) Int. Cl.: G02B 1/04, C08F 2/44

(54) **COMPOSITE RESIN COMPOSITION AND SAME RESIN COMPOSITION PRODUCTION METHOD**
VERBUNDHARZZUSAMMENSETZUNG UND HERSTELLUNGSVERFAHREN FÜR DIESELBE VERBUNDHARZZUSAMMENSETZUNG
COMPOSITION DE RÉSINE COMPOSITE ET PROCÉDÉ DE PRODUCTION DE LADITE COMPOSITION DE RÉSINE

(30) Priority: 12.12.2013 JP 2013257195
(43) Date of publication of application: 11.01.2017
(73) Proprietor: Nagase ChemteX Corporation, Osaka-shi, Osaka 550-8668 (JP)
(72) Inventor: SUGIURA, Yuki, Tatsuno-shi Hyogo 679-4124 (JP); AOKI, Nobuaki, Tatsuno-shi Hyogo 679-4124 (JP)
(74) Representative: Hoffmann Eitle
(86) International application number: PCT/JP2014/082774
(87) International publication number: WO 2015/087946

(56) References cited:
- WO-A2-2012/158317
- JP-A- 2006 052 325
- JP-A- 2011 137 082
- JP-A- 2014 238 539
- US-A1- 2006 147 703
- DATABASE WPI Week 201141 Thomson Scientific, London, GB; AN 2011-G62238 XP002770800, -& JP 2011 116943 A (NAGASE CHEMTEX CORP) 16 June 2011 (2011-06-16)
- DATABASE WPI Week 201116 Thomson Scientific, London, GB; AN 2011-B71562 XP002770801, -& JP 2011 032444 A (SUMITOMO BAKELITE CO LTD) 17 February 2011 (2011-02-17)
- DATABASE WPI Week 200971 Thomson Scientific, London, GB; AN 2009-P75364 XP002770802, -& JP 2009 235359 A (OSAKA GAS CO LTD) 15 October 2009 (2009-10-15)

## Description

### TECHNICAL FIELD

The present invention relates to a composite resin composition and a method for producing the resin composition. The present invention also relates to a thin film, a molded product, an optical film, and a display device.

### BACKGROUND ART

Studies have been actively conducted to combine organic and inorganic materials into composites in order to improve functionality of organic-based materials. Composites of organic and inorganic materials have led to the production of materials having flexibility and moldability derived from organic materials and also having heat resistance, light resistance, and excellent optical characteristics (such as high refractive index) derived from inorganic materials. Examples of such composite materials include an organic-inorganic hybrid resin in which a metal such as silicon or titanium is introduced into the skeleton of an organic resin via a covalent bond, and a dispersion material in which nano-sized inorganic fine particles are uniformly dispersed in an organic resin.

These composite materials have been used in applications such as various types of optical films, display devices, and semiconductor devices for which high levels of transparency, light resistance, heat resistance, and refractive index are required these days. In particular, in these applications, further studies have been made on dispersion materials containing nano-sized inorganic fine particles uniformly dispersed therein, which are capable of producing cured products (such as thin films and molded products) with high design flexibility and high-level properties. For obtaining a fine dispersion of inorganic fine particles in an organic material in the order of several tens of nanometers, generally, a dispersant and a surface treatment agent are added in relatively large amounts to the formulation in order to form a uniform and stable dispersion system (Patent Literature 1) .

Adding a dispersant and a surface treatment agent in large amounts allows the particles to be uniformly dispersed, but lowers the refractive index at the same time. In addition, because the dispersant and the surface treatment agent have poor light resistance and poor heat resistance, the resulting cured products such as thin films and molded products may thus have poor light resistance and poor heat resistance. If the dispersant and the surface treatment agent are poorly compatible with other components, the resulting cured products such as thin films and molded products may have problems such as cloudiness. Further, because the above applications often require patterning, resin compositions containing inorganic fine particles that are poorly soluble in alkaline developing solutions for patterning are also required to exhibit good patterning properties.

### CITATION LIST

### PATENT LITERATURE

Patent Literature 1: JP-A 2011-116943

### SUMMARY OF INVENTION

### TECHNICAL PROBLEM

In view of the above situation, the present invention aims to provide a composite resin composition that is excellent in dispersion stability and uniformity and that gives a cured product excellent in transparency, heat resistance, light resistance, and optical characteristics (high refractive index).

### SOLUTION TO PROBLEM

The present inventors conducted studies on a composite resin composition capable of providing excellent optical characteristics (high refractive index). As a result, they found that it is possible to very finely disperse inorganic fine particles to an average particle size after dispersion of 10 to 70 nm even if the total amount of a dispersant and a surface treatment agent is reduced as much as possible or the dispersant and/or surface treatment agent is not used at all. The present invention was thus completed.

Specifically, the present invention relates to a composite resin composition containing:
inorganic fine particles;
a solvent; and
an epoxy ester resin or a polycarboxylic resin having a fused-ring structure derived from at least one selected from the group consisting of indene, tetralin, fluorene, xanthene, anthracene, and benzanthracene;
wherein the composite resin composition optionally comprises a dispersant and/or a surface treatment agent, and in the case where the composite resin composition comprises the dispersant and/or the surface treatment agent, the total amount of the dispersant and the surface treatment agent in terms of active ingredients is 5 parts by weight or less relative to 100 parts by weight of the inorganic fine particles,
wherein the inorganic fine particles have an average particle size after dispersion of 10 to 70 nm.

In the composite resin composition of the present invention, the inorganic fine particles preferably include at least one selected from the group consisting of zirconium oxide, titanium oxide, and barium titanate.

The present invention relates to a method for producing the composite resin composition, the method including mixing the inorganic fine particles, the solvent, and the fused ring-containing resin before completion of dispersing in a bead mill.

The present invention also relates to a thin film and a molded product which are obtained by curing the composite resin composition of the present invention. The present invention still also relates to an optical film having the thin film, and to a display device having the thin film or the molded product.

### ADVANTAGEOUS EFFECTS OF INVENTION

The total amount of a dispersant and a surface treatment agent is reduced as much as possible or the dispersant and/or surface treatment agent is not used at all in the composite resin composition of the present invention. Thus, the resulting cured products such as thin films and molded products can be imparted with a high refractive index. In addition, problems such as poor light resistance and poor heat resistance of the resulting cured products such as thin films and molded products due to insufficient light resistance and insufficient heat resistance of the dispersant and the surface treatment agent are prevented. In addition, problems such as cloudiness of the resulting cured products such as thin films and molded products due to poor compatibility of the dispersant and the surface treatment agent with other components are also prevented.

### DESCRIPTION OF EMBODIMENTS

### <<Composite resin composition>>

The composite resin composition of the present invention is a composite resin composition containing:
inorganic fine particles;
a solvent; and
an epoxy ester resin or a polycarboxylic resin having a fused-ring structure derived from at least one selected from the group consisting of indene, tetralin, fluorene, xanthene, anthracene, and benzanthracene; and
wherein the composite resin composition optionally comprises a dispersant and/or a surface treatment agent, and in the case where the composite resin composition comprises the dispersant and/or the surface treatment agent, the total amount of the dispersant and the surface treatment agent in terms of active ingredients is 5 parts by weight or less relative to 100 parts by weight of the inorganic fine particles,
wherein the inorganic fine particles have an average particle size after dispersion of 10 to 70 nm.

### <Inorganic fine particles>

Examples of the inorganic fine particles include metal oxide fine particles, nitrides, complex oxides consisting of two or more metals, and compounds of metal oxides doped with another element. Examples of metal oxide fine particles include zirconium oxide (ZrO₂), titanium oxide (TiO₂), silicon oxide (SiO₂) , aluminium oxide (Al₂O₃), iron oxide (Fe₂O₃, FeO, Fe₃O₄), copper oxide (CuO, Cu₂O) , zinc oxide (ZnO), yttrium oxide (Y₂O₃), niobium oxide (Nb₂O₅) , molybdenum oxide (MoO₃), indium oxide (In₂O₃, In₂O), tin oxide (SnO₂), tantalum oxide (Ta₂O₅), tungsten oxide (WO₃, W₂O₅), lead oxide (PbO, PbO₂), bismuth oxide (Bi₂O₃), cerium oxide (CeO₂, Ce₂O₃), antimony oxide (Sb₂O₅, Sb₂O₅) , and germanium oxide (GeO₂, GeO). Examples of nitrides include silicon nitride and boron nitride. Examples of complex oxides consisting of two or more metals include titanates such as barium titanate, titanium/silicon complex oxides, and yttria-stabilized zirconia. Examples of such complex oxides include not only compounds and solid solutions which are formed of multiple elements but also those having a core-shell structure in which each metal oxide fine particle as the core is coated with a metal oxide of another metal, and those having a structure in which multiple components are dispersed (for example, fine particles of multiple metal oxides are dispersed in fine particles of a metal oxide).

Examples of compounds of metal oxides doped with another element include tantalum-doped titanium oxides and niobium-doped titanium oxides. These inorganic fine particles may be used alone or in combination of two or more thereof. Any method may be used to produce the inorganic fine particles. In view of easy availability and easiness in adjusting optical characteristics such as refractive index, the inorganic fine particles preferably include at least one selected from the group consisting of zirconium oxide, titanium oxide, and barium titanate.

The primary particle size of the inorganic fine particles is not particularly limited, but it is preferably 1 to 70 nm, more preferably 1 to 50 nm. With a primary particle size of less than 1 nm, the inorganic fine particles have a large specific surface area and a high cohesive energy. Thus, the dispersion stability may be difficult to maintain. In contrast, with a primary particle size of more than 70 nm, the inorganic fine particles in a thin film or a molded product cause intense light scattering. Thus, the transparency may not be maintained at high levels. The primary particle size can be measured using a device by a method such as a dynamic light scattering method, a laser diffraction method, or an ultracentrifugal sedimentation method.

The average particle size of the inorganic fine particles after dispersion, i.e., the average particle size of the inorganic fine particles in the composite resin composition of the present invention, is 10 to 70 nm, preferably 10 to 50 nm. Particles having a small primary particle size are needed to obtain an average particle size after dispersion of less than 10 nm, and such particles may be difficult to disperse. Use of particles having an average particle size of more than 70 nm may cause cloudiness in the resulting cured products such as thin films and molded products.

The composite resin composition of the present invention can contain a large amount of the inorganic fine particles. For example, an amount of 200 parts by weight or more or even an amount of 500 parts by weight or more, which is usually too large an amount to be added, can be added relative to 100 parts by weight of the fused ring-containing resin. The amount of the inorganic fine particles is not particularly limited, but it is preferably 0.1 to 5000 parts by weight, more preferably 1 to 2000 parts by weight, still more preferably 5 to 1000 parts by weight, relative to 100 parts by weight of the fused ring-containing resin. With an amount of less than 0.1 parts by weight, the properties of the inorganic fine particles cannot be sufficiently exhibited, whereas an amount of more than 5000 parts by weight results in poor film-forming properties.

The metal oxide fine particles that are pre-dispersed in various solvents may be used. Examples of solvents include alcohols such as methanol, ethanol, 2-propanol, and butanol; esters such as ethyl acetate, butyl acetate, ethyl lactate, propylene glycol monomethyl ether acetate, and γ-butyrolactone; ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diethylene glycol monoethyl ether; ketones such as acetone, methyl ethyl ketone, methyl isobutyl ketone, acetylacetone, and cyclohexanone; aromatic hydrocarbons such as benzene, toluene, xylene, and ethylbenzene; and amides such as dimethylformamide, N,N-dimethylacetamide, and N-methylpyrrolidone. The solvent and the metal oxide fine particles are preferably contained in a ratio of 30:70 to 90:10.

### <Solvent>

Any solvent may be used. Examples include alcohols such as methanol and ethanol; ethers such as tetrahydrofuran; ethylene glycol ethers such as ethylene glycol monomethyl ether, ethylene glycol dimethyl ether, ethylene glycol methyl ethyl ether, and ethylene glycol monoethyl ether; ethylene glycol alkylether acetates such as methyl cellosolve acetate and ethyl cellosolve acetate; diethylene glycol dialkyl ethers such as diethylene glycol diethyl ether, diethylene glycol dimethyl ether, diethylene glycol dibutyl ether, and diethylene glycol ethyl methyl ether; diethylene glycol monoalkyl ethers such as diethylene glycol monomethyl ether, diethylene glycol monoethyl ether, and diethylene glycol monobutyl ether; propylene glycol monoalkyl ethers such as propylene glycol monomethyl ether; alkylene glycol monoalkyl ether acetates such as propylene glycol monomethyl ether acetate, propylene glycol monoethyl ether acetate, ethylene glycol monomethyl ether acetate, ethylene glycol monobutyl ether acetate, diethylene glycol monoethyl ether acetate, diethylene glycol monobutyl ether acetate, and 3-methoxybutyl-1-acetate; aromatic hydrocarbons such as toluene and xylene; ketones such as methyl ethyl ketone, methyl amyl ketone, cyclohexanone, and 4-hydroxy-4-methyl-2-pentanone; esters such as ethyl 2-hydroxypropanoate, methyl 2-hydroxy-2-methylpropionate, ethyl 2-hydroxy-2-methylpropionate, ethoxyethyl acetate, hydroxyethyl acetate, methyl 2-hydroxy-2-methylbutanoate, methyl 3-methoxypropionate, ethyl 3-methoxypropionate, methyl 3-ethoxypropionate, ethyl 3-ethoxypropionate, ethyl acetate, butyl acetate, methyl lactate, ethyl lactate, dimethyl succinate, diethyl succinate, diethyl adipate, diethyl malonate, and dibutyl oxalate. Among these, ethylene glycol ethers, alkylene glycol monoalkyl ether acetates, diethylene glycol dialkyl ethers, ketones, and esters are preferred; and ethyl 3-ethoxypropionate, ethyl lactate, propylene glycol monomethyl ether acetate, diethylene glycol monoethyl ether acetate, and methyl amyl ketone are more preferred. These solvents may be used alone or in combination of two or more thereof.

The amount of the solvent is not particularly limited, but it is preferably 5 to 95% by weight, more preferably 30 to 90% by weight, in the composite resin composition. With an amount of less than 5% by weight, the dispersion state may be difficult to maintain. With an amount of more than 95% by weight, a thick film may be difficult to produce.

### <Epoxy ester resin and polycarboxylic resin>

The epoxy ester resin or the polycarboxylic resin having a fused-ring structure derived from at least one selected from the group consisting of indene, tetralin, fluorene, xanthene, anthracene, and benzanthracene is an epoxy ester resin (E) or a polycarboxylic resin (G).

The epoxy ester resin (E) can be obtained by reacting an epoxy resin (A) represented by the following formula (1) with a monobasic carboxylic acid (B); or by reacting an alcohol compound (C) represented by the following formula (10) with a glycidyl ester compound (D). The epoxy ester resin (E) is preferably one having a fused ring structure derived from xanthene or fluorene for providing excellent dispersibility and excellent heat resistance.

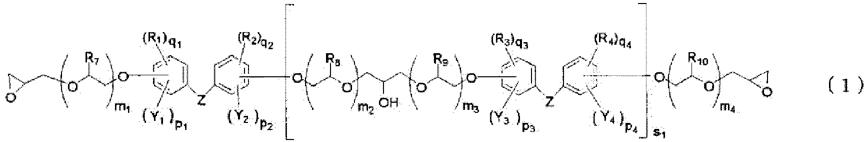

In the formula (1), Y' s₁₋₄ each independently represent a group represented by the following formula (2) or the following formula (3); and p's₁₋₄ each independently represent an integer of 0 to 4.

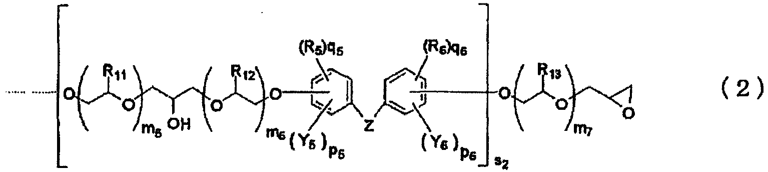

In the formula (2), Y's₅₋₆ each independently represent a group represented by the formula (2) or the following formula (3) ; and p's₅₋₆ each independently represent an integer of 0 to 4. In the case where Y's₁₋₄ in the formula (1) each represent a group represented by the formula (2) and Y's₅₋₆ in the formula (2) each represent a group represented by the formula (2), Y's₁₋₄ in the formula (1) form oligomers containing a group represented by the formula (2) as a structural unit.

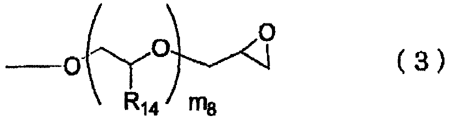

In the formulae (1) and (2), Z represents a divalent group having a fused ring structure derived from at least one selected from the group consisting of indene, tetralin, fluorene, xanthene, anthracene, and benzanthracene as shown in the following formulae (4) to (9); R's₁₋₆ each independently represent a C1-C10 linear, branched, or cyclic alkyl group or alkenyl group, a C1-C5 alkoxy group, an optionally substituted phenyl group, or a halogen atom; q's₁₋₆ each independently represent an integer of 0 to 4; and s'S₁₋₂ each independently represent an integer of 0 to 10. In the formulae (1) to (3), R' s₇₋₁₄ each independently represent a hydrogen atom or a methyl group; and m's₁₋₈ each independently represent an integer of 0 to 10. Multiple R' s₁₋₁₄ and Y's₁₋₆ may be the same or different from each other. The structural formula of the formula (1) may be bilaterally symmetrical or asymmetrical.

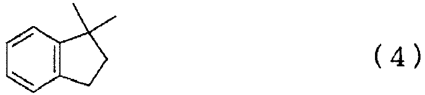

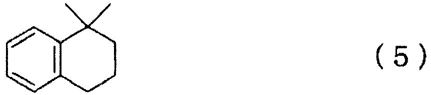

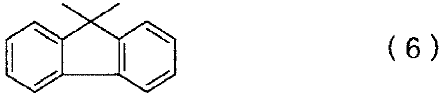

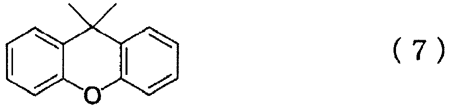

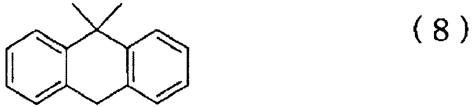

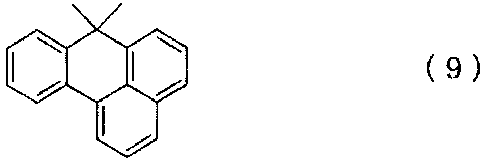

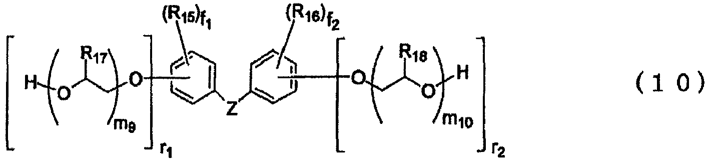

In the formula (10), Z is as defined above; R's₁₅₋₁₆ each independently represent a C1-C10 linear, branched, or cyclic alkyl group or alkenyl group, a C1-C5 alkoxy group, an optionally substituted phenyl group, or a halogen atom; f's₁₋₂ each independently represent an integer of 0 to 4; R' s₁₇₋₁₈ each independently represent a hydrogen atom or a methyl group; m's₉₋₁₀ each independently represent an integer of 0 to 10; and r's₁₋₂ each independently represent an integer of 1 to 5. Multiple R's₁₅₋₁₈ may be the same or different from each other. The structural formula of the formula (10) may be bilaterally symmetrical or asymmetrical.

The monobasic carboxylic acid (B) is not particularly limited as long as it is a compound having one carboxyl group. Examples include (meth)acrylic acid, cyclopropanecarboxylic acid, 2,2,3,3-tetramethyl-1-cyclopropanecarboxylic acid, cyclopentane carboxylic acid, 2-cyclopentenyl carboxylic acid, 2-furancarboxylic acid, 2-tetrahydrofurancarboxylic acid, cyclohexanecarboxylic acid, 4-propylcyclohexanecarboxylic acid, 4-butylcyclohexanecarboxylic acid, 4-pentylcyclohexanecarboxylic acid, 4-hexylcyclohexanecarboxylic acid, 4-heptylcyclohexanecarboxylic acid, 4-cyanocyclohexane-1-carboxylic acid, 4-hydroxycyclohexanecarboxylic acid, 1,3,4,5-tetrahydroxycyclohexane-1-carboxylic acid, 2-(1,2-dihydroxy-4-methylcyclohexyl)propionic acid, shikimic acid, 3-hydroxy-3,3-diphenylpropionic acid, 3-(2-oxocyclohexyl)propionic acid, 3-cyclohexene-1-carboxylic acid, 4-cyclohexene-1,2-dicarboxylic acid hydrogen alkyl, cycloheptanecarboxylic acid, norbornenecarboxylic acid, tetracyclododecenecarboxylic acid, 1-adamantanecarboxylic acid, (4-tricyclo[5.2.1.0^{2.6}]deca-4-yl)acetic acid, p-methylbenzoic acid, p-ethylbenzoic acid, p-octylbenzoic acid, p-decylbenzoic acid, p-dodecylbenzoic acid, p-methoxybenzoic acid, p-ethoxybenzoic acid, p-propoxybenzoic acid, p-butoxybenzoic acid, p-pentyloxybenzoic acid, p-hexyloxybenzoic acid, p-fluorobenzoic acid, p-chlorobenzoic acid, p-chloromethylbenzoic acid, pentafluorobenzoic acid, pentachlorobenzoic acid, 4-acetoxybenzoic acid, 2,6-dihydroxybenzoic acid, 3,5-di-t-butyl-4-hydroxybenzoic acid, o-benzoylbenzoic acid, o-nitrobenzoic acid, o-(acetoxybenzoyloxy)benzoic acid, monomethyl terephthalate, monomethyl isophthalate, monocyclohexyl isophthalate, phenoxyacetic acid, chlorophenoxyacetic acid, phenylthioacetic acid, phenylacetic acid, 2-oxo-3-phenylpropionic acid, o-bromophenylacetic acid, o-iodophenylacetic acid, methoxyphenylacetic acid, 6-phenylhexanoic acid, biphenylcarboxylic acid, α-naphthoic acid, β-naphthoic acid, anthracenecarboxylic acid, phenanthrenecarboxylic acid, anthraquinone-2-carboxylic acid, indancarboxylic acid, 1,4-dioxo-1,4-dihydronaphthalene-2-carboxylic acid, 3,3-diphenylpropionic acid, nicotinic acid, isonicotinic acid, cinnamic acid, 3-methoxycinnamic acid, 4-methoxycinnamic acid, and quinolinecarboxylic acid. These may be used alone or in combination of two or more thereof. Particularly preferred examples of the monobasic carboxylic acid (B) include those having an unsaturated group into which a radiation-polymerizable functional group can be introduced. For example, (meth)acrylic acid is preferred. The term "radiation-polymerizable functional group" as used herein refers to a functional group having properties that can cause polymerization reaction upon exposure to various types of radiation. The term "radiation" encompasses visible ray, ultraviolet ray, far ultraviolet ray, X ray, electron beam, molecular beam, γ ray, synchrotron radiation, proton beam, and the like.

The glycidyl ester compound (D) is not particularly limited. Examples include glycidyl (meth)acrylate, glycidyl acetate, glycidyl butyrate, glycidyl benzoate, p-ethylglycidyl benzoate, and glycidyl (tere)phthalate. These may be used alone or in combination of two or more thereof. Among these, glycidyl esters of monobasic carboxylic acids are particularly preferred. In particular, those having an unsaturated group into which a radiation-polymerizable functional group can be introduced, such as glycidyl (meth)acrylate, are preferred.

Reaction of the epoxy resin (A) represented by the formula (1) with the monobasic carboxylic acid (B) and reaction of the alcohol compound (C) represented by the formula (10) with the glycidyl ester compound (D) are carried out in appropriate solvents as needed in the temperature range of 50°C to 120°C for 5 to 30 hours. Examples of solvents include alkylene monoalkyl ether acetates such as methyl cellosolve acetate, propylene glycol monomethyl ether acetate, ethylene glycol monomethyl ether acetate, ethylene glycol monobutyl ether acetate, diethylene glycol monoethyl ether acetate, diethylene glycol monobutyl ether acetate, and 3-methoxybutyl-1-acetate; alkylene monoalkyl ethers such as diethylene glycol monomethyl ether, diethylene glycol monoethyl ether, and diethylene glycol dibutyl ether; ketones such as methyl ethyl ketone and methyl amyl ketone; and esters such as dimethyl succinate, diethyl succinate, diethyl adipate, diethyl malonate, and dibutyl oxalate. Among these, propylene glycol monomethyl ether acetate and 3-methoxybutyl-1-acetate are preferred. Further, a catalyst and a polymerization inhibitor can be used as needed. Examples of catalysts include phosphonium salts, quaternary ammonium salts, phosphine compounds, tertiary amine compounds, and imidazole compounds. The amount thereof is not particularly limited, but it is preferably 0.01 to 10% by weight of the entire reaction product. Examples of polymerization inhibitors include hydroquinone, methylhydroquinone, hydroquinone monomethyl ether, 4-methylquinoline, phenothiazine, 2,6-diisobutylphenol, and 2,6-di-tert-butyl-4-methylphenol. The amount thereof is usually 5% by weight or less of the entire reaction product.

The polycarboxylic resin (G) can be obtained by reacting the epoxy ester resin (E) with a polybasic carboxylic acid or its anhydride (F).

The polybasic carboxylic acid or its anhydride (F) is not particularly limited as long as it is a carboxylic acid having multiple carboxyl groups, such as a dicarboxylic acid or a tetracarboxylic acid, or its anhydride. Examples include dicarboxylic acids such as maleic acid, succinic acid, itaconic acid, phthalic acid, tetrahydrophthalic acid, hexahydrophthalic acid, methylhexahydrophthalic acid, methylendomethylene tetrahydrophthalic acid, chlorendic acid, methyltetrahydrophthalic acid, and glutaric acid, and their anhydrides; a trimellitic acid and its anhydride; tetracarboxylic acids such as pyromellitic acid, benzophenone tetracarboxylic acid, biphenyltetracarboxylic acid, and diphenylethertetracarboxylic acid, and their dianhydrides.

The polycarboxylic resin (G) may be, for example, a resin represented by the following formula (11) or a resin represented by the following formula (12).

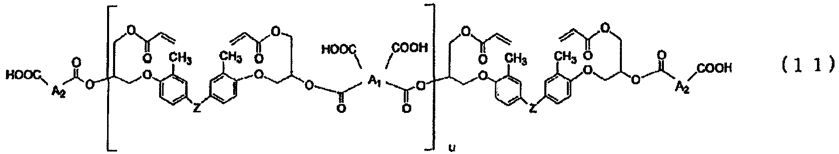

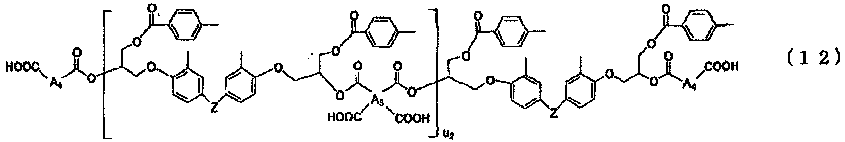

In the formulae (11) and (12), Z represents a divalent group having a fused ring structure derived from at least one selected from the group consisting of indene, tetralin, fluorene, xanthene, anthracene, and benzanthracene; and A₁ and A₃ represent tetracarboxylic dianhydride residues and A₂ and A₄ represent dicarboxylic anhydride residues. In addition, u and u₂ represent average values in the range of 0 to 130.

In the formulae (11) and (12), Z is preferably a divalent group having a fused ring structure derived from xanthene or fluorene because, advantageously, such a polycarboxylic resin (G) has a high refractive index and the refractive index difference between the polycarboxylic resin (G) and the inorganic fine particles can be reduced.

The polycarboxylic resin (G) can be obtained by reacting the epoxy ester resin (E) with the polybasic carboxylic acid or its anhydride (F). This reaction can be carried out in the presence of a polyhydric alcohol in order to improve the heat resistance and the thermal yellowing resistance of the resin to be obtained.

Any polyhydric alcohol may be used. Examples include aliphatic diols such as ethylene glycol, diethylene glycol, 1,2-propanediol, 1,3-propanediol, dipropylene glycol, 1,3-butanediol, 1,4-butanediol, neopentyl glycol, 2-methyl-1,3-propanediol, 3-methyl-1,5-pentanediol, 1,6-hexanediol, 1,6-nonane diol, and 1,9-nonane diol; alicyclic diols such as 1,4-cyclohexane dimethanol, tricyclodecane dimethanol, and hydrogenated bisphenol A; aromatic diols such as an ethylene oxide adduct of bisphenol A and a propylene oxide adduct of bisphenol A; trihydric or higher alcohols such as glycerol, trimethylolpropane, trimethylolethane, ditrimethylolpropane, pentaerythritol, sorbitol, and dipentaerythritol. These may be used alone or in combination of two or more thereof.

In this reaction, the adding order of the epoxy ester resin (E), the polyhydric alcohol(s), and the polybasic carboxylic acid or its anhydride (F) is not particularly specified. For example, these components may be simultaneously mixed and reacted; or, the epoxy ester resin (E) and the polyhydric alcohol (s) may be mixed first, and the polybasic carboxylic acid or its anhydride (F) is then added thereto and mixed. Further, these reaction products may be mixed and reacted with an additional polybasic carboxylic acid.

With a suitable selection of the type of the polybasic carboxylic acid or its anhydride (F), it is possible to produce a polycarboxylic resin (G-a) having various fused ring structures with different structures, and a polycarboxylic resin (G-b) which is obtained by reaction of a polyhydric alcohol (s). Specifically, for example, the following first to sixth polycarboxylic resins (G-a-i) to (G-a-iii) and (G-b-i) to (G-b-iii) are produced. It should be noted that these are examples.

(G-a-i) A first polycarboxylic resin: a resin obtained by mixing and reacting the epoxy ester resin (E) with one polybasic carboxylic acid or its anhydride (F); (G-a-ii) a second polycarboxylic resin: a resin obtained by mixing and reacting the epoxy ester resin (E) with a mixture of two or more polybasic carboxylic acids or their anhydrides (F) (for example, a mixture of a dicarboxylic anhydride and a tetracarboxylic dianhydride); and (G-a-iii) a third polycarboxylic resin: a resin obtained by reacting the epoxy ester resin (E) with a tetracarboxylic acid or its dianhydride and further reacting the reaction product with a dicarboxylic acid or its anhydride.

(G-b-i) A fourth polycarboxylic resin: a resin obtained by mixing and reacting the epoxy ester resin (E) with a polyhydric alcohol and one polybasic carboxylic acid or its anhydride (F) ; (G-b-ii) a fifth polycarboxylic resin: a resin obtained by mixing and reacting the epoxy ester resin (E) with a polyhydric alcohol and a mixture of two or more polybasic carboxylic acids or their anhydrides (F) (for example, a mixture of a dicarboxylic anhydride and a tetracarboxylic dianhydride) ; and (G-b-iii) a sixth polycarboxylic resin: a resin obtained by reacting the epoxy ester resin (E) with a polyhydric alcohol and a tetracarboxylic acid or its dianhydride and further reacting the reaction product with a dicarboxylic acid or its anhydride.

The thus-obtained polycarboxylic resins (G-a) and (G-b) having various different fused ring structures are used for intended use.

The term "polybasic carboxylic acid or its anhydride (F) " means at least one of a specific polybasic carboxylic acid and its corresponding anhydride. For example, if the polybasic carboxylic acid is phthalic acid, the polybasic carboxylic acid or its anhydride (F) refers to at least one of phthalic acid and phthalic acid anhydride. The term "a mixture of two or more polybasic carboxylic acids or their anhydrides (F) " means that at least two or more polybasic carboxylic acids or their anhydrides are present together. Thus, in the methods of (G-a-ii) and (G-b-ii), at least two polybasic carboxylic acids or their anhydrides (F) are involved in the reaction.

In any of the methods described above, the polycarboxylic resin (G) is produced by dissolving (suspending) the epoxy ester resin (E), the polyhydric alcohol(s), and the polybasic carboxylic acid or its anhydride (F) in a solvent by the method (in the order) exemplified above and reacting them under heat. Examples of solvents include cellosolve solvents such as ethyl cellosolve acetate and butyl cellosolve acetate; ester solvents of alkylene glycol monoalkyl ethers and acetic acid, such as propylene glycol monomethyl ether acetate and 3-methoxybutyl acetate; and ketone solvents such as methyl ethyl ketone, methyl isobutyl ketone, and cyclohexanone. A catalyst may be added as needed. Examples of catalysts include phosphonium salts, quaternary ammonium salts, phosphine compounds, tertiary amine compounds, and imidazole compounds. The amount thereof is not particularly limited, but it is preferably 0.01 to 10% by weight of the entire reaction product.

The reaction temperature in the above reaction is not particularly limited, but it is preferably 50°C to 130°C, more preferably 70°C to 120°C. At a temperature of lower than 50°C, the reaction may not proceed smoothly, resulting in unreacted residues of the polybasic carboxylic acid or its anhydride (F) . In contrast, at a temperature of higher than 130°, some carboxyl groups may be condensed with some hydroxyl groups, resulting in a rapid increase in the molecular weight.

In the case where a polyhydric alcohol (s) is used in the production of the polycarboxylic resin (G), the molar ratio of hydroxyl groups of the epoxy ester resin (E) to hydroxyl groups of the polyhydric alcohol (s) (hydroxyl groups of the epoxy ester resin (E) /hydroxyl groups of the polyhydric alcohol (s)) is not particularly limited, but it is preferably 99/1 to 50/50, more preferably 95/5 to 60/40. If the molar ratio of the hydroxyl groups of the polyhydric alcohol(s) is more than 50, the molecular weight of the polycarboxylic resin (G) may rapidly increase, resulting in gelation. If the molar ratio is less than 1, the heat resistance and thermal discoloration resistance tend to be hardly improved.

The amount of the polybasic carboxylic acid or its anhydride (F) is not particularly limited, but it is preferably 0.1 to 1 equivalent, more preferably 0.4 to 1 equivalent in terms of acid anhydride groups per equivalent (mole) of the hydroxyl groups of the epoxy ester resin (E) (or the total hydroxyl groups of the epoxy ester resin (E) and the polyhydric alcohol (s), if used). With an amount of less than 0.1 equivalents, the molecular weight of the polycarboxylic resin (G) will not sufficiently increase. Thus, a cured product of the composite resin composition containing the polycarboxylic resin (G) may have insufficient heat resistance, or the composite resin composition may remain on a substrate after developing. In contrast, with an amount of more than 1 equivalent, there will be unreacted residues of the polybasic carboxylic acid or its anhydride (F), reducing the molecular weight of the polycarboxylic resin (G). Thus, the composite resin composition containing the polycarboxylic resin (G) may have poor developing properties. The amount in terms of acid anhydride groups indicates the amount calculated by converting all the carboxyl groups and acid anhydride groups in the polybasic carboxylic acid or its anhydride (F) into acid anhydride groups.

The second, third, fifth, and sixth polycarboxylic resins (G) are produced using two or more polybasic carboxylic acids or their anhydrides (F). Generally, a dicarboxylic anhydride and a tetracarboxylic dianhydride are used. The ratio (molar ratio) of the dicarboxylic anhydride to the tetracarboxylic dianhydride (dicarboxylic anhydride/tetracarboxylic dianhydride) is preferably 1/99 to 90/10, more preferably 5/95 to 80/20. If the ratio of the dicarboxylic anhydride is less than 1, the resin viscosity may be high, resulting in poor workability. In addition, the molecular weight of the polycarboxylic resin (G) will be too high. Consequently, in the case where a coating formed on a substrate using the composite resin composition containing such a polycarboxylic resin (G) is exposed to light, the exposed portion will not easily dissolve in a developing solution, making it difficult to obtain a desired pattern. In contrast, if the ratio of the dicarboxylic anhydride is more than 90, the molecular weight of the polycarboxylic resin will be too low. Consequently, in the case where a coating is formed on a substrate using the composite resin composition containing such a polycarboxylic resin, problems such as sticking remaining on the coating after pre-baking easily occur.

In the composite resin composition of the present invention, the polycarboxylic resin (G) preferably contains a radiation-polymerizable functional group, specifically, an unsaturated group such as a (meth)acryloyl group. In the case where the polycarboxylic resin (G) is a resin containing a radiation-polymerizable functional group, the composite resin composition of the present invention is photocurable and thus can be used as a photosensitive composite resin composition (H) . The term "photosensitivity" refers to properties that cause chemical reaction upon exposure to various kinds of radiation. Examples of such radiation include, in the order from longer to shorter wavelengths, visible rays, ultraviolet rays, electron rays, X rays, α rays, β rays, and γ rays. Among these, the most preferred radiation is ultraviolet rays in practical use in terms of economy and efficiency. The ultraviolet rays that can be suitably used are rays of ultraviolet light oscillated from lamps such as a low-pressure mercury lamp, a high-pressure mercury lamp, an ultrahigh-pressure mercury lamp, an arc lamp, and a xenon lamp. Radiation having a shorter wavelength than the ultraviolet rays has high chemical reactivity and is theoretically better than the ultraviolet rays, but the ultraviolet rays are more practical in terms of economy.

### <Optional component>

The composite resin composition of the present invention may optionally contain other components, in addition to the inorganic fine particles, solvent, epoxy ester resin or polycarboxylic resin and optionally comprised dispersant and/or surface treatment agent. Examples of other components include curing agents, leveling agents, resin components, thermal polymerization inhibitors, adhesion promoting agents, epoxy group curing accelerators, surfactants, and defoamers.

### <Dispersant and/or surface treatment agent>

The composite resin composition of the present invention exhibits good dispersibility even when the dispersant and/or surface treatment agent is not used at all, but the composite resin composition may contain a small amount of the dispersant and/or surface treatment agent.

Any dispersant may be used. Examples include polyacrylic acid dispersants, polycarboxylic acid dispersants, phosphoric acid dispersants, and silicon dispersants. These dispersants may be used alone or in combination of two or more thereof.

The inorganic fine particles may be surface-treated inorganic fine particles. Surface treatment is a treatment in which a compound (such as a coupling agent) capable of reacting with a hydroxyl group present on the fine particle surface is bonded to the hydroxyl group. For the surface treatment, the inorganic fine particles are dispersed in a solvent, and a coupling agent is added to the dispersion under acidic conditions to perform its action. Any surface treatment agent such as a silane coupling agent or a titanium coupling agent may be used. Examples include (meth)acryloxysilanes such as 3-(meth)acryloxypropyltrimethoxysilane and 3-(meth)acryloxypropylmethyldimethoxysilane; epoxysilanes such as 3-glycidoxypropyltrimethoxysilane, 3-glycidoxypropyltriethoxysilane, 3-glycidoxypropylmethyldiethoxysilane, and 2-(3,4-epoxycyclohexyl)ethyltrimethoxysilane; vinylsilanes such as vinyltrimethoxysilane, vinyltriethoxysilane, vinyltris(β-methoxyethoxy)silane, dimethylvinylmethoxysilane, vinyltrichlorosilane, and dimethylvinylchlorosilane; aminosilanes such as N-2-(aminoethyl)-3-aminopropyltrimethoxysilane, 3-aminopropyltrimethoxysilane, and N-2-(aminoethyl)-3-aminopropylmethyldimethoxysilane; quaternary ammonium salts such as hydrochloride salt of N-(vinylbenzyl)-2-aminoethyl-3-aminopropyltrimethoxysilane; p-styryltrimethoxysilane; phenyltrimethoxysilane; and titanates such as isopropyl dimethacryl isostearoyl titanate, and isopropyl diacryl isostearoyl titanate. These surface treatment agents may be used alone or in combination of two or more thereof. Among these surface treatment agents, epoxysilanes and (meth)acryloxysilanes are preferred because they have reactive functional groups, are cured with a fused ring-containing resin, and can fix the inorganic fine particles in a thin film or a molded product.

In the case where the composite resin composition of the present invention contains the dispersant and/or surface treatment agent, the total amount of the dispersant and the surface treatment agent is 5 parts by weight or less, preferably 3 parts by weight or less in terms of the weight of active ingredients relative to 100 parts by weight of the inorganic fine particles. If the total amount of the dispersant and the surface treatment agent is more than 5 parts by weight, a cured product of the composite resin composition may have a low refractive index, poor heat resistance, and poor light resistance. In the case where the composite resin composition of the present invention contains the dispersant and/or surface treatment agent, the minimum total amount of the dispersant and the surface treatment agent is not particularly limited, but it is preferably 0.1 parts by weight or more in terms of the weight of active ingredients relative to 100 parts by weight of the inorganic fine particles.

In the case where the composite resin composition of the present invention is the photosensitive composite resin composition (H), it is preferred to add a photopolymerization initiator (I). Further, in order to control the curing properties or the film properties such as hardness after curing, the photosensitive composite resin composition (H) may contain various kinds of photocurable monomers and photocurable resins (J) other than the unsaturated group-containing polycarboxylic resin (G) within a degree that does not impair the effects of the present invention.

The photopolymerization initiator (I) refers to a compound that acts to initiate photopolymerization and/or a compound that has a sensitization effect. Examples of such compounds include: acetophenones such as acetophenone, 2,2-diethoxyacetophenone, p-dimethylacetophenone, p-dimethylaminopropiophenone, dichloroacetophenone, trichloroacetophenone, and p-tert-butylacetophenone; benzophenones such as benzophenone, 2-chlorobenzophenone, and p,p'-bisdimethylaminobenzophenone; benzyl; benzoin; benzoinethers such as benzoinmethylether, benzoinisopropylether, and benzoinisobutylether; benzyl dimethyl ketal; sulfur compounds such as thioxanthene, 2-chlorothioxanthene, 2,4-diethylthioxanthene, 2-methylthioxanthene, and 2-isopropylthioxanthene; anthraquinones such as 2-ethylanthraquinone, octamethylanthraquinone, 1,2-benzanthraquinone, and 2,3-diphenylanthraquinone; azobisisobutyronitrile; organic peroxides such as benzoyl peroxide and cumene peroxide; and thiol compounds such as 2-mercaptobenzimidazole, 2-mercaptobenzoxazole, and 2-mercaptobenzothiazole. These photopolymerization initiators (I) may be used alone or in combination of two or more thereof.

The amount of the photopolymerization initiator (I) is preferably 0.05 to 10.0 parts by weight, more preferably 0.1 to 5.0 parts by weight, relative to 100 parts by weight of the unsaturated group-containing compound.

The term "unsaturated group-containing compound" refers to every radiation-curable unsaturated group-containing compound contained in the photosensitive composite resin composition (H), and encompasses radiation-curable types of the polycarboxylic resin (G) as well as the photocurable monomers and the photocurable resins (J) other than the polycarboxylic resin (G).

In addition, in the case where the polycarboxylic resin (G) does not have a radiation-polymerizable functional group such as an unsaturated group, the composite resin composition of the present invention can be made to function as the photosensitive composite resin composition (H) by adding, as essential components, various kinds of the photocurable monomers and photocurable resins (J) or a quinonediazide compound (K).

The photosensitive composite resin composition (H) that contains the quinonediazide compound (K) is a positive photosensitive composite resin composition. The positive resin composition itself is not cured upon exposure. In the case of the positive resin composition, in order to obtain a cured film after patterning, for example, the photosensitive composite resin composition (H) is mixed with a thermosetting resin such as an epoxy compound (L), exposed to radiation, developed, and then thermally cured. In this manner, a cured film can be obtained. Such thermal curing occurs due to crosslinking reaction induced by heat between carboxylic acid groups of the polycarboxylic resin (G) and epoxy groups of the epoxy compound (L).

These photocurable monomers and the photocurable resins (J), which are monomers and oligomers which can be polymerized by radiation, can be added according to the properties suitable for the intended use of the composition. Examples of monomers and oligomers which can be polymerized by radiation include the following monomers and oligomers: hydroxyl group-containing (meth)acrylic acid esters such as 2-hydroxyethyl (meth)acrylate, 2-hydroxypropyl (meth)acrylate, and 3-hydroxypropyl (meth) acrylate; and (meth) acrylic acid esters such as ethylene glycol di(meth)acrylate, diethylene glycol di(meth)acrylate, triethylene glycol di(meth)acrylate, tetraethylene glycol di(meth)acrylate, tetramethylene glycol di(meth)acrylate, trimethylolpropane tri(meth)acrylate, trimethylolethane tri(meth)acrylate, pentaerythritol di(meth)acrylate, pentaerythritol tri(meth)acrylate, pentaerythritol tetra(meth)acrylate, dipentaerythritol tetra(meth)acrylate, dipentaerythritol hexa(meth)acrylate, and glycerol (meth) acrylate. These monomers or oligomers may be used alone or in combination of two or more thereof.

These monomers or oligomers act as viscosity modifiers or photocrosslinking agents, and can be used within a range that does not impair the properties of the resin composition of the present invention. Usually, the composition contains at least one of the monomers and oligomers in an amount of 50 parts by weight or less relative to 100 parts by weight of the polycarboxylic resin (G) . If the amount of such a monomer or an oligomer is more than 50 parts by weight, there may be problems in dispersibility and uniformity of the inorganic fine particles.

The quinonediazide compound (K) is preferably a compound esterified with 1,2-quinonediazide sulfonic acid. Examples include a compound esterified with trihydroxybenzophenone and 1,2-naphthoquinonediazidesulfonic acid, a compound esterified with tetrahydroxybenzophenone and
1,2-naphthoquinonediazidesulfonic acid, a compound esterified with pentahydroxybenzophenone and
1,2-naphthoquinonediazidesulfonic acid, a compound esterified with hexahydroxybenzophenone and
1,2-naphthoquinonediazidesulfonic acid, a compound esterified with bis(2,4'-dihydroxyphenyl)methane and
1,2-naphthoquinonediazidesulfonic acid, a compound esterified with bis(p-hydroxyphenyl)methane and
1, 2-naphthoquinonediazidesulfonic acid, a compound esterified with tri(p-hydroxyphenyl)methane and
1,2-naphthoquinonediazidesulfonic acid, a compound esterified with 1,1,1-tri(p-hydroxyphenyl)ethane and
1,2-naphthoquinonediazidesulfonic acid, a compound esterified with bis(2,3,4-trihydroxyphenyl)methane and
1, 2-naphthoquinonediazidesulfonic acid, a compound esterified with 2,2-bis(2,3,4-trihydroxyphenyl)propane and
1, 2-naphthoquinonediazidesulfonic acid, a compound esterified with
1,1,3-tris(2,5-dimethyl-4-hydroxyphenyl)-3-phenylpropane and 1,2-naphthoquinonediazidesulfonic acid, a compound esterified with
4,4'-[1-[4-[1-[4-hydroxyphenyl]-1-methylethyl]phenyl]ethyli dene]bisphenol and 1,2-naphthoquinonediazidesulfonic acid, a compound esterified with
bis(2,5-dimethyl-4-hydroxyphenyl)-2-hydroxyphenylmethane and 1,2-naphthoquinonediazidesulfonic acid, a compound esterified with
3,3,3',3'-tetramethyl-1,1'-spiroindene-5,6,7,5',6',7'-hexan ol and 1,2-naphthoquinonediazidesulfonic acid, and a compound esterified with 2,2,4-trimethyl-7,2',4'-trihydroxyflavan and 1,2-naphthoquinonediazidesulfonic acid. Other quinonediazide compounds can also be used.

The epoxy compound (L) refers to a polymer or monomer having at least one epoxy group. Examples of polymers having at least one epoxy group include epoxy resins such as phenol novolac epoxy resin, cresol novolac epoxy resin, bisphenol A epoxy resin, bisphenol F epoxy resin, bisphenol S epoxy resin, biphenyl epoxy resin, and alicyclic epoxy resin.

Examples of monomers having at least one epoxy group include phenyl glycidyl ether, p-butylphenol glycidyl ether, triglycidyl isocyanurate, diglycidyl isocyanurate, allyl glycidyl ether, and glycidyl methacrylate. These compounds may be used alone or in combination of two or more thereof.

The epoxy compound (s) (L) can be used within a range that does not impair the properties of the resin composition of the present invention. Usually, the epoxy compound(s) (L) is added in an amount of 50 parts by weight or less relative to 100 parts by weight of the polycarboxylic resin (G). A composition containing the epoxy compound(s) (L) in an amount of more than 50 parts by weight is susceptible to cracking when cured and having poor adhesion.

In the following, the term "fused ring-containing resin" means an epoxy ester resin or a polycarboxylic resin having a fused-ring structure according to the composite resin composition of the present invention. The method for producing the composite resin composition of the present invention characteristically includes mixing the inorganic fine particles, the solvent, and the fused ring-containing resin before completion of dispersing in a bead mill. In the case where the composite resin composition contains the dispersant and/or surface treatment agent, preferably, the inorganic fine particles, the solvent, the fused ring-containing resin, and the dispersant and/or surface treatment agent are mixed before completion of dispersing in a bead mill. A significant feature of the method is that the fused ring-containing resin is mixed before completion of dispersing in a bead mill. Generally, the inorganic fine particles are first dispersed in a solvent in a bead mill, and then mixed with components such as the fused ring-containing resin. Such a method requires addition of a substantial amount of the dispersant and/or surface treatment agent. In contrast, in the method for producing the composite resin composition of the present invention, the fused ring-containing resin are mixed before completion of dispersing in a bead mill. Thus, it is possible to reduce the total amount of the dispersant and/or surface treatment agent as much as possible or it is possible not to use the dispersant and/or surface treatment agent at all. As a result, a decrease in refractive index can be suppressed, and a decrease in light resistance and heat resistance of a cured product can also be suppressed.

In the method for producing the composite resin composition of the present invention, it is sufficient as long as the inorganic fine particles, the solvent, and the fused ring-containing resin are mixed before completion of dispersing in a bead mill. Thus, the adding order of the inorganic fine particles, the solvent, and the fused ring-containing resin before dispersing in a bead mill is not limited. For example, all the components may be mixed simultaneously, or each component may be added sequentially one by one and mixed. The same applies to the case where the composite resin composition contains the dispersant and/or surface treatment agent. In addition, in the case where the composite resin composition contains the dispersant and/or surface treatment agent and a continuous bead mill is used, for example, the inorganic fine particles, the solvent, and the fused ring-containing resin may be mixed before starting dispersing in a bead mill, followed by addition of the dispersant and/or surface treatment agent during dispersing in the bead mill; or the inorganic fine particles, the solvent, and the dispersant and/or surface treatment agent may be mixed before starting dispersing in a bead mill, followed by addition of the fused ring-containing resin during dispersing in the bead mill. In addition, as long as the inorganic fine particles, the solvent, and the fused ring-containing resin are mixed before completion of dispersing in a bead mill, an additional solvent and an additional fused ring-containing resin may be added after completion of dispersing in the bead mill. The same applies to the case where the composite resin composition contains the dispersant and/or surface treatment agent.

Optional components such as a curing agent may be added at any point before, during, or after dispersing in a bead mill.

### (Thin films and molded products)

Cured products, such as thin films and molded products, obtained by curing the composite resin composition of the present invention have a high refractive index and are excellent in properties such as transparency, heat resistance, and light resistance. Thus, the composite resin composition of the present invention is preferably used as a material for protection films of display devices and electronic components (for example, a material for forming protection films such as color filters used in devices such as liquid crystal display devices, integrated circuit devices, and solid-state image sensing devices) ; a material for forming interlayer insulating films and/or planarizing films; a binder for color resist; a solder resist that is used for producing printed circuit boards; or an alkali-soluble photosensitive composition suitable for the formation of columnar spacers which are alternative to bead spacers in liquid crystal devices. The composite resin composition of the present invention is also preferably used as a material of various optical components (such as lenses, LEDs, plastic films, substrates, and optical disks) ; a coating agent for forming protection films of the optical components; an adhesive for optical components (such as an adhesive for optical fibers); a coating agent for producing polarizing plates; and a photosensitive resin composition for holographic recording. Thin films and molded products obtained by curing the composite resin composition of the present invention are also encompassed by the present invention.

### EXAMPLES

The present invention is specifically described below with reference to examples.

### 1. Materials used

### 1-1. Inorganic fine particles

Zirconium oxide (Daiichi Kigenso Kagaku Kogyo Co., Ltd., UEP-100)
Zirconium oxide (Daiichi Kigenso Kagaku Kogyo Co., Ltd., UEP-50)
Barium titanate (Toda Kogyo Corp., T-BTO-020RF)

### 1-2. Solvent

### Cyclohexanone (Sinopec)

Propylene glycol monomethyl ether (Nippon Nyukazai Co., Ltd., PGME)
Propylene glycol monomethyl ether acetate (Daicel Corporation, PGMEA)

### 1-3. Dispersant

Polymeric dispersant (BYK Japan, BYK-118, active ingredient 100%)
Polymeric dispersant (Kusumoto Chemicals, Ltd., ED153, active ingredient 50%)
Polymeric dispersant (TOHO Chemical Industry Co., Ltd., RS-710, active ingredient 100%)

### 1-4. Curing agent

2-Methyl-1-(4-methylthiophenyl)-2-morpholinopropan-1-one (BASF Japan Ltd., IRGACURE 907)

### 2. Synthesis of fused ring-containing resin

### (Production Example 1) Synthesis of fused ring-containing resin A

A 300-ml four-necked flask was charged with 115 g (epoxy equivalent of 270 g/eq) of bisphenol fluorene diglycidyl ether (Osaka Gas Chemicals Co., Ltd., OGSOL PG), 600 mg of triethyl benzyl ammonium chloride as a catalyst, 30 mg of 2,6-diisobutylphenol as a polymerization inhibitor, and 36 g of acrylic acid. The mixture was heated and dissolved at 90°C to 100°C while air was blown thereinto at a rate of 10 mL/min. Subsequently, the mixture was gradually heated to 120°C. The solution became transparent and viscous, but stirring was continued. During stirring, the acid value was measured, and heating and stirring were continued until the acid value was below 1.0 mg KOH/g. Thus, a pale yellow transparent, fused ring-containing epoxy ester resin in a solid state was obtained. It took 15 hours until the target acid value was reached. Subsequently, 65 g of propylene glycol monomethyl ether acetate (PGMEA) was added to dissolve the fused ring-containing epoxy ester resin. The mixture was then mixed with 15 g of pyromellitic anhydride (PMDA), 7.6 g of tetrahydrophthalic anhydride (THPA), and 0.1g of tetraethyl ammonium bromide. The resulting mixture was gradually heated, and reacted at 110°C to 115°C for 14 hours. Thus, a solution of a fused ring-containing resin A in PGMEA was obtained. The disappearance of the acid anhydride was observed in the IR spectrum. The fused ring-containing resin A corresponds to the polycarboxylic resin (G-a-ii).

### (Production Example 2) Synthesis of fused ring-containing resin B

A total of 65 g of propylene glycol monomethyl ether acetate (PGMEA) and 1.5 g of ditrimethylolpropane as a polyhydric alcohol were added to dissolve a fused ring-containing epoxy ester resin obtained in the same manner as in Production Example 1. The mixture was then mixed with 15 g of pyromellitic anhydride (PMDA) and 0.1 g of tetraethyl ammonium bromide. The resulting mixture was gradually heated, and reacted at 110°C to 115°C for 14 hours. Further, 7.6 g of tetrahydrophthalic anhydride (THPA) was added to the mixture, and a reaction was carried out for 10 hours. Thus, a solution of a fused ring-containing resin B in PGMEA was obtained. The disappearance of the acid anhydride was observed in the IR spectrum. The fused ring-containing resin B corresponds to the polycarboxylic resin (G-b-iii).

### (Production Example 3) Synthesis of fused ring-containing resin C

A total of 65 g of propylene glycol monomethyl ether acetate (PGMEA) was added to dissolve an epoxy ester resin represented by the following formula (13). The mixture was mixed with 15 g of bisphenol tetracarboxylic dianhydride (BPDA) and 0.1 g of tetraethyl ammonium bromide. The resulting mixture was gradually heated, and reacted at 110°C to 115°C for 14 hours. Thus, a solution of a fused ring-containing resin C in PGMEA was obtained. The disappearance of the acid anhydride was observed in the IR spectrum. The fused ring-containing resin C corresponds to the polycarboxylic resin (G-a-i). The epoxy ester resin represented by the following formula (13) can be synthesized by the method disclosed in JP-A 2009-185270.

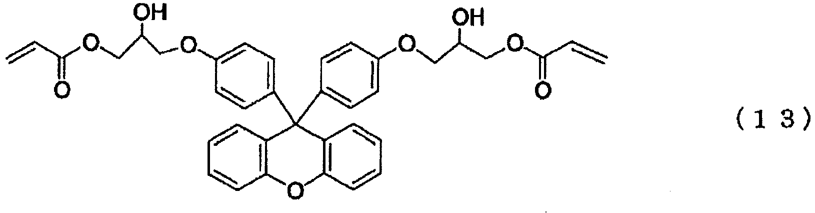

### 3. Composite resin composition

### (Comparative Examples 1 and 2)

The solvent, dispersant, and inorganic fine particles were mixed in amounts shown in Table 1, and the mixture was dispersed using a media-type disperser (bead mill). Subsequently, the dispersion was mixed with the fused ring-containing resin and the curing agent. Thus, a composite resin composition was obtained. The average particle size of the inorganic fine particles in the resulting composite resin composition was measured by the method described later. Table 1 shows the results. In Table 1, the amounts of the solvents, dispersants, and fused ring-containing resins are expressed in parts by weight relative to 100 parts by weight of the inorganic fine particles, and the amount of the curing agent is expressed in parts by weight relative to 100 parts by weight of the fused ring-containing resin.

### (Examples 1 to 8)

The solvent, fused ring-containing resin, dispersant, and inorganic fine particles were mixed in amounts shown in Table 1, and the mixture was dispersed using a media-type disperser (bead mill) . The dispersion was further mixed with a curing agent. Thus, a composite resin composition was obtained. For the composite resin composition, the average particle size after dispersion was calculated by the method described below. Table 1 shows the results.

### (Examples 9 and 10)

The solvent, fused ring-containing resin, and inorganic fine particles were mixed in amounts shown in Table 1, and the mixture was dispersed using a media-type disperser (bead mill) . The dispersion was further mixed with a curing agent. Thus, a composite resin composition was obtained. For the composite resin composition, the average particle size after dispersion was calculated by the method described below. Table 1 shows the results.

### 4. Method for forming thin films

The composite resin composition obtained in each of the examples and the comparative examples was applied to a glass substrate using a spinner. Subsequently, the composite resin composition was pre-baked on a hot plate at 90°C for 2 minutes. Thus, a coating having a thickness of about 1 µm was formed. Using a 250 W high pressure mercury lamp, the coating surface was irradiated with ultraviolet rays having an intensity of 9.5 mW/cm² at a wavelength of 405 nm to a dose of 1000 mJ/cm². Thus, the coating was cured into a thin film. The thin film was evaluated in terms of total light transmittance, haze value, refractive index, and surface roughness by the following methods. Table 1 shows the results.

### 5. Evaluation method

### 5-1. Average particle size after dispersion

For the composite resin composition obtained in each of the examples and the comparative examples, the Z-average particle size was calculated based on a scattering intensity distribution measured by a dynamic light scattering method using Zetasizer Nano ZS available from Malvern.

### 5-2. Total light transmittance

Measurement was carried out using a haze meter "HZ-2" available from Suga Test Instruments Co., Ltd.

### 5-3. Haze value

Measurement was carried out using a haze meter "HZ-2" available from Suga Test Instruments Co., Ltd.

### 5-4. Refractive index

The refractive index at 633 nm was measured using a Spectroscopic Ellipsometer.

### 5-5. Surface roughness (Ra)

Measurement was carried out using an atomic force microscope available from Shimadzu Corporation.

**[Table 1]**

| | | **Comparative Examples** | | **Examples** | | | | | | | | | |
|---|---|---|---|---|---|---|---|---|---|---|---|---|---|
| | | 1 | 2 | 1 | 2 | 3 | 4 | 5 | 6 | 7 | 8 9 | | 10 |
| Inorganic fine particles | UEP-100 | 100 | 100 | 100 | 100 | 100 | 100 | | | | | 100 | |
| | UEP-50 | | | | | | | 100 | 100 | | | | 100 |
| | T-BTO-020RF | | | | | | | | | 100 | 100 | | |
| Solvent | Cyclohexanone | 233 | 233 | 233 | 233 | 233 | 150 | 400 | | 400 | | 233 | 233 |
| | PGME | | | | | | | | 400 | | | | |
| | PGMEA | | | | | | | | | | 400 | | |
| Dispersant (weight of active ingredients) | BYK-118 | 10 | 2.5 | 2.5 | 2.5 | 2.5 | 2.5 | | | | 2.5 | | |
| | ED153 | | | | | | | 2.5 | 2.5 | | | | |
| | RS-710 | | | | | | | | | 2.5 | | | |
| Fused ring-containing resin (weight of active ingredients) | Fused ring-containing resin A | 25 | 25 | 25 | 11 | 43 | 25 | | | | | 25 | 25 |
| | Fused ring-containing resin B | | | | | | | 25 | | | | | |
| | Fused ring-containing resin C | | | | | | | | 25 | 25 | 25 | | |
| Curing agent | IRGACURE 907 | 5 | 5 | 5 | 5 | 5 | 5 | 5 | 5 | 5 | 5 | 5 | 5 |
| Evaluation of composite resin composition | Average particle size after dispersion (nm) | 30 | 80 | 30 | 30 | 30 | 30 | 45 | 45 | 50 | 50 | 30 | 45 |
| Evaluation of thin film | Total light transmittance (%) | 96 | 96 | 96 | 95 | 96 | 96 | 95 | 95 | 94 | 94 | 96 | 95 |
| | Haze value (%) | 0.2 | 5 | 0.1 | 0.1 | 0.1 | 0.1 | 0.2 | 0.2 | 0.2 | 0.2 | 0.1 | 0.2 |
| | Refractive index (633 nm) | 1.76 | Unmesurable | 1.80 | 1.84 | 1.76 | 1.80 | 1.82 | 1.82 | 1.87 | 1.87 | 1.81 | 1.83 |
| | Surface roughness (nm) | 2.0 | Unmeasurable | 2.0 | 2.5 | 1.5 | 2.1 | 2.5 | 2.5 | 2.6 | 2.6 | 2.2 | 2.4 |

In Comparative Example 1, a cured product having a low refractive index (1.76) was obtained because the dispersant was added in an amount of 10 parts by weight. In Comparative Example 2, the amount of the dispersant was reduced to 2.5 parts by weight, but the inorganic particles had an average particle size after dispersion of 80 nm. It was impossible to measure the refractive index or the surface roughness of a cured product. In contrast, in each of Examples 1 to 8, although the amount of the dispersant was as small as 2.5 parts by weight, a cured product having a high refractive index and low surface roughness was obtained because the fused ring-containing resin was mixed before dispersing the inorganic fine particles in the bead mill. In Examples 9 and 10, although no dispersant was used, a cured product having a high refractive index and low surface roughness was obtained because the fused ring-containing resin was mixed before dispersing the inorganic fine particles in the bead mill.

### INDUSTRIAL APPLICABILITY

The composite resin composition of the present invention, which gives a cured product having a high refractive index, is suitably used as a component of products such as optical films, display devices, color filters, touch panels, electronic paper, solar cells, and semiconductor devices.

## Claims

1. A composite resin composition comprising:
inorganic fine particles;
a solvent; and
an epoxy ester resin or a polycarboxylic resin having a fused-ring structure derived from at least one selected from the group consisting of indene, tetralin, fluorene, xanthene, anthracene, and benzanthracene;
wherein the composite resin composition optionally comprises a dispersant and/or a surface treatment agent, and in the case where the composite resin composition comprises the dispersant and/or the surface treatment agent, the total amount of the dispersant and the surface treatment agent in terms of active ingredients is 5 parts by weight or less relative to 100 parts by weight of the inorganic fine particles,
wherein the inorganic fine particles have an average particle size after dispersion of 10 to 70 nm.

2. The composite resin composition according to claim 1,
wherein the inorganic fine particles comprise at least one selected from the group consisting of zirconium oxide, titanium oxide, and barium titanate.

3. A method for producing the composite resin composition according to claim 1 or 2, the method comprising:
mixing the inorganic fine particles, the solvent, the fused ring-containing resin before completion of dispersing in a bead mill.

4. A thin film,
which is obtainable by curing the composite resin composition according to claim 1 or 2.

5. A molded product,
which is obtainable by curing the composite resin composition according to claim 1 or 2.

6. An optical film comprising the thin film according to claim 4.

7. A display device comprising the thin film according to claim 4.

8. A display device comprising the molded product according to claim 5.

## Patentansprüche

1. Verbundharzzusammensetzung, umfassend:
anorganische feine Teilchen;
ein Lösungsmittel; und
ein Epoxidesterharz oder ein Polycarboxylharz mit einer kondensierten Ringstruktur, abgeleitet aus mindestens einem Vertreter ausgewählt aus der Gruppe bestehend aus Inden, Tetralin, Fluoren, Xanthen, Anthracen und Benzanthracen;
wobei die Verbundharzzusammensetzung optional ein Dispergiermittel und/oder ein Oberflächenbehandlungsmittel umfasst, und in dem Fall, dass die Verbundharzzusammensetzung das Dispergiermittel und/oder das Oberflächenbehandlungsmittel umfasst, die Gesamtmenge des Dispergiermittels und des Oberflächenbehandlungsmittels in Bezug auf Wirksubstanzen 5 Gewichtsteile oder weniger, bezogen auf 100 Gewichtsteile der anorganischen feinen Teilchen, beträgt,
wobei die anorganischen feinen Teilchen eine mittlere Teilchengröße nach Dispersion von 10 bis 70 nm aufweisen.

2. Verbundharzzusammensetzung gemäß Anspruch 1,
wobei die anorganischen feinen Teilchen mindestens einen Vertreter umfassen, ausgewählt aus der Gruppe bestehend aus Zirconiumoxid, Titanoxid und Bariumtitanat.

3. Verfahren zur Herstellung der Verbundharzzusammensetzung gemäß Anspruch 1 oder 2, wobei das Verfahren folgendes umfasst:
die anorganischen feinen Teilchen, das Lösungsmittel, das kondensierter-Ring-haltige Harz werden vor Vollendung des Dispergierens in einer Kugelmühle gemischt.

4. Dünner Film,
welcher durch Aushärten der Verbundharzzusammensetzung gemäß Anspruch 1 oder 2 erhältlich ist.

5. Formprodukt,
welches durch Aushärten der Verbundharzzusammensetzung gemäß Anspruch 1 oder 2 erhältlich ist.

6. Optischer Film, der den dünnen Film gemäß Anspruch 4 umfasst.

7. Displayvorrichtung, die den dünnen Film gemäß Anspruch 4 umfasst.

8. Displayvorrichtung, die das Formprodukt gemäß Anspruch 5 umfasst.

## Revendications

1. Composition de résine composite comprenant :
des particules fines inorganiques ;
un solvant ; et
une résine ester époxy ou une résine polycarboxylique ayant une structure à cycle fusionné dérivée d'au moins l'un choisi parmi le groupe constitué d'indène, tétraline, fluorène, xanthène, anthracène, et benzanthracène ;
dans laquelle la composition de résine composite comprend optionnellement un dispersant et/ou un agent de traitement de surface, et dans le cas où la composition de résine composite comprend le dispersant et/ou l'agent de traitement de surface, la quantité totale du dispersant et de l'agent de traitement de surface en termes d'ingrédients actifs est de 5 parties en poids ou moins par rapport à 100 parties en poids des particules fines inorganiques,
dans laquelle les particules fines inorganiques ont une taille de particule moyenne après dispersion de 10 à 70 nm.

2. La composition de résine composite selon la revendication 1,
dans laquelle les particules fines inorganiques comprennent au moins l'un choisi parmi le groupe constitué d'oxyde de zirconium, d'oxyde de titane, et de titanate de baryum.

3. Procédé de production de la composition de résine composite selon la revendication 1 ou 2, le procédé comprenant :
le mélange des particules fines inorganiques, du solvant, de la résine contenant un cycle fusionné avant la complétion de la dispersion dans un mélangeur à billes.

4. Film mince,
qui peut être obtenu en durcissant la composition de résine composite selon la revendication 1 ou 2.

5. Produit moulé,
qui peut être obtenu en durcissant la composition de résine composite selon la revendication 1 ou 2.

6. Film optique comprenant le film mince selon la revendication 4.

7. Dispositif d'affichage comprenant le film mince selon la revendication 4.

8. Dispositif d'affichage comprenant le produit moulé selon la revendication 5.
